# EUROPÄISCHE PATENTSCHRIFT

(11) **EP 1 577 596 B1**
(45) Veröffentlichungstag und Bekanntmachung des Hinweises auf die Patenterteilung: **18.01.2012**
(21) Anmeldenummer: 05003140.0
(22) Anmeldetag: 15.02.2005
(51) Int. Cl.: F16K 31/06, H01F 7/08, H01F 7/126

(54) **Schaltvorrichtung**
Switching device
Dispositif de commutation

(30) Priorität: 17.03.2004 DE 102004014376
(43) Veröffentlichungstag der Anmeldung: 21.09.2005
(73) Patentinhaber: Hydac Electronic GmbH, 66128 Saarbrücken (DE)
(72) Erfinder: Kattler, Frank, 66346 Püttlingen (DE)
(74) Vertreter: Bartels & Partner

(56) Entgegenhaltungen:
- EP-A- 0 939 259
- EP-A- 1 235 015
- DE-A1- 2 920 670
- DE-A1- 19 717 445
- US-A1- 2001 023 688
- US-A1- 2002 134 444

## Beschreibung

Die Erfindung betrifft eine Schaltvorrichtung zum Betätigen von Schaltventilen mit einem hülsenförmigen Magnetgehäuse, das zumindest teilweise ein Polrohr und einen Polkern umfaßt, die über eine magnetische Trennung voneinander getrennt sind und die einen Betätigungskolben umfassen, der unter der Einwirkung einer bestrombaren Spule längsverfahrbar innerhalb eines Schaltgehäuses verfahrbar ist und der über ein Betätigungsteil, das den Polkern durchgreift, auf einen Ventilkolben einwirkt, der in einem Ventilgehäuse des Schaltventils geführt ist.

Durch die DE 197 17 445 C2 ist eine gattungsgemäße Schaltvorrichtung, insbesondere Elektromagnet zum Betätigen von Schaltventilen, bekannt, mit einem hülsenförmigen Magnetgehäuse, das einen Polkern umschließt, der auf der Betätigungsseite des Elektromagneten, an der ein vom Magnetanker bewegbares Betätigungsglied zugänglich ist, einen Abschluß des Magnetgehäuses bildet, das in einem der Betätigungsseite benachbarten Bereich mit dem Polkern über eine zumindest bereichsweise formschlüssig wirkende Verbindung verbunden ist. Diese Verbindung weist eine in den Umfang des Polkerns eingearbeitete Ringnut, ein darin aufnehmbares Abdichtelement sowie im Magnetgehäuse eine ringförmige Einsickung zur Bildung formschlüssig an den Innenwänden der Ringnut angreifender Anlageflächen sowie einer umlaufenden, am Abdichtelement anliegenden Abdichtfläche auf.

Dank dieser Ausbildung ergibt sich bei formschlüssiger Übertragung des Kraftschlusses zwischen Magnetgehäuse und Polkern gleichzeitig eine einwandfreie Abdichtung durch Anlage der ringförmigen Einsickung des Magnetgehäuses am in der Ringnut befindlichen Abdichtelement. Dies erlaubt einen druckdichten Abschluß des Schaltgehäuses nach außen hin. Als mit dem Magnet- oder Schaltgehäuse zu verbindendes Bauteil ist ein Ventilgehäuse vorgesehen, das einen an der zugewandten Endfläche des Polkerns anliegenden Kragen aufweist, mit dem der Endbereich des Schalt- oder Magnetgehäuses durch Verbördelung verbunden ist. Bei der bekannten Lösung gestaltet sich die Fertigung besonders einfach und kostengünstig, wenn das Schalt- oder Magnetgehäuse ein einteiliges Fließpreßteil ist, das an seinem der Betätigungsseite entgegengesetzten Bodenteil ein nach einwärts verlaufendes, zur Außenseite des Schalt- oder Magnetgehäuses offenes Polrohr als hinteren Polkörper aufweist.

Obwohl die bekannte Lösung gute Abdichtungs- und Festigkeitseigenschaften aufweist, ist insbesondere bei hohen Beanspruchungen die Verbindung von Schalt- oder Magnetgehäuse mit Ventilgehäuse über die genannte Verbördelung nicht ausreichend. Auch ist das Herstellen der Verbördelung aufwendig und mithin kostenintensiv, insbesondere wenn diese in der Art eines Blechbiegeteils genau auszuführen ist.

Ausgehend von diesem Stand der Technik liegt der Erfindung die Aufgabe zugrunde, unter Beibehalten ihrer Vorteile die bekannte Schaltvorrichtung dahingehend weiter zu verbessern, dass unter Beibehalten guter Abdichtungs- und Festigkeitseigenschaften die Verbindung zwischen Schaltgehäuse und Ventilgehäuse einfacher herstellbar ist. Eine dahingehende Aufgabe löst eine Schaltvorrichtung mit den Merkmalen des Patentanspruches 1 in seiner Gesamtheit.

Dadurch, dass gemäß dem kennzeichnenden Teil des Patentanspruches 1 zur Verbindung von Schalt- mit Ventilgehäuse das Schaltgehäuse mindestens zwei radial sich erstreckende Flanschteile aufweist, die dem Durchgriff von Befestigungsmitteln dienen, und dass zwischen Schalt- und Ventilgehäuse mindestens eine Dichteinrichtung angeordnet ist, kann auf die komplizierte Verbördelungstechnik zum Herstellen der Verbindung verzichtet werden. Vielmehr genügt es bei der erfindungsgemäßen Lösung, die genannten Gehäuseteile von Ventilgehäuse und Schaltgehäuse stoßseitig aneinander anzulegen, um dann über die Flanschteile mit ihren Befestigungsmitteln die feste Verbindung herzustellen. Die in dem Verbindungsbereich von Schalt- und Ventilgehäuse einzubringende Dichteinrichtung, vorzugsweise in Form eines O-Dichtringes, erlaubt eine sichere Abdichtung zwischen den genannten Gehäusebereichen. Der Einlegevorgang für die Dichteinrichtung kann einfach vorgenommen werden und durch die stirnseitige Anlage der Gehäuseteile mit anschließender Verpressung der Dichteinrichtung über die Befestigungsmittel in den Flanschteilen ist sichergestellt, dass die Dichteinrichtung nicht ungewollt ihre Lage verändern kann, was die Dichtwirkung beeinträchtigen könnte. Auch wird über das schonende Anlegen eine Beschädigung der Dichteinrichtung vermieden, was wiederum dem Erhalt der lang andauernden Dichtwirkung zugute kommt.

Aufgrund des flanschartigen Aufsatzes der Schaltvorrichtung auf dem eigentlichen Ventilgehäuse ist darüber hinaus ein modularer Aufbau gewährleistet und bei Versagen der Schaltvorrichtung und/oder des Schaltventils kann die jeweilige Komponente gegen eine neue schnell und einfach ausgetauscht werden, was Stillstandszeiten und Wartungskosten entsprechend senken hilft. Auch besteht die Möglichkeit, im Sinne eines modularen Baukastensystems ein einmal ausgeliefertes Schaltventil, beispielsweise bei Umbaumaßnahmen an einer hydraulischen Einrichtung od. dgl., mit einer dann hierfür geeigneten Schaltvorrichtung nachzurüsten, sofern man die relevanten Anschlußstellen zwischen Schaltgehäuse und Ventilgehäuse von ihren geometrischen Abmessungen her beibehält.

Weitere vorteilhafte Ausführungsformen der erfindungsgemäßen Schaltvorrichtung sind Gegenstand der Unteransprüche.

Im folgenden wird die erfindungsgemäße Schaltvorrichtung anhand eines Ausführungsbeispiels nach der Zeichnung näher erläutert. Dabei zeigen in prinzipieller und nicht maßstäblicher Darstellung die
- Fig.1: einen Längsschnitt durch die Schaltvorrichtung gemäß der Linie I - I in Fig.2, wobei in Blickrichtung auf die Fig.1 gesehen an der rechten Seite sich das nur teilweise dargestellte Ventilgehäuse anschließt;
- Fig.2: in Blickrichtung des Pfeiles X nach der Fig.1 eine Unteransicht auf die Schaltvorrichtung ohne Ventilgehäuse.

Die in den Figuren gezeigte Schaltvorrichtung dient dem Betätigen von Ventilen und weist hierfür ein hülsenförmiges Magnetgehäuse 10 auf. Das zylindrische Magnetgehäuse 10 ist außenumfangsseitig mit Durchbrechungen 12 versehen, die eine Einbringmöglichkeit für das Kunststoffmaterial bilden, aus dem das Schaltgehäuse 14 besteht, das als Kunststoff-Spritzgießteil das Magnetgehäuse 10 außenumfangsseitig umfaßt. Der einfacheren Darstellung wegen sind die Durchbrechungen 12 nicht ausgefüllt dargestellt. Das Magnetgehäuse 10 umfaßt zumindest teilweise ein Polrohr 16 und einen Polkern 18. Zwischen Polrohr 16 und Polkern 18 ist eine magnetische Trennung 20 vorhanden, beispielsweise in Form einer besonders ausgebildeten Schweißnaht oder in Form eines Luftspaltes. Der dahingehende Aufbau ist für Schaltvorrichtungen üblich, so dass an dieser Stelle hierauf nicht mehr näher eingegangen wird.

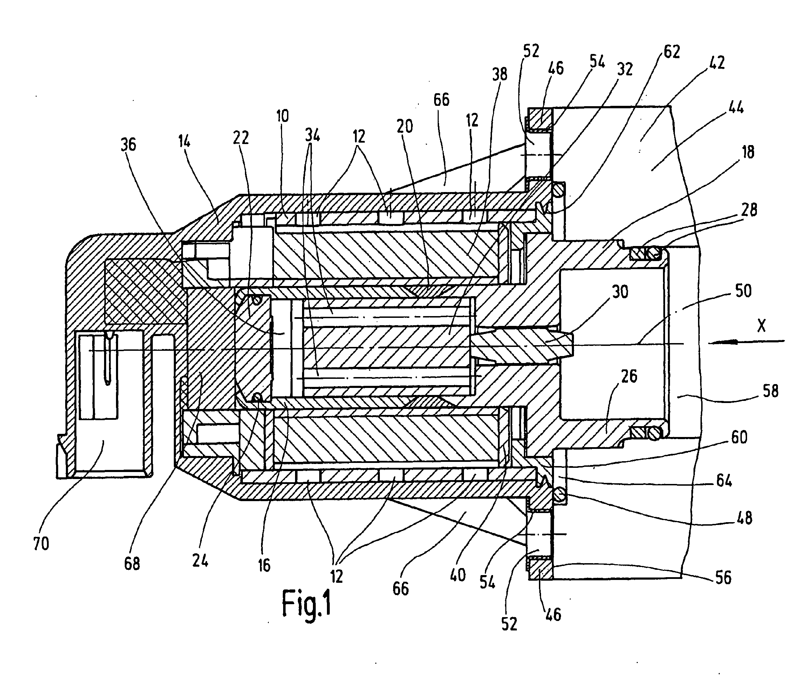

Das Polrohr 16 ist an seinem in Blickrichtung auf die Fig.1 gesehen linken hinteren Ende umgebördelt und umfaßt dergestalt einen Abschlußboden 22. Über einen O-Dichtring 24 ist der dahingehende Abschlußboden 22 außenumfangsseitig gegenüber dem Innenumfang des hinteren Endes des Polrohres 16 abgedichtet. Der Polkern 18 verbreitet sich von der magnetischen Trennung 22 kommend stufenweise nach außen und weist einen topfartigen Fortsatz 26 auf, der zu seinem freien Ende hin und außenumfangsseitig mit Dichtmitteln 28 versehen ist, einmal in Form eines Führungsbandes und einmal in Form eines O-Dicht-ringes. Der Polkern 18 ist von einer Mittenausnehmung durchgriffen, längs der ein kolbenartiges Betätigungsteil 30 verfahrbar ist. Das dahingehende Betätigungsteil 30 steht in Wirkverbindung mit einem Betätigungskolben 32, der längsverfahrbar innerhalb des Polrohres 16 sowie des Polkerns 18 geführt ist. Der Betätigungskolben 32 ist von zwei Axialbohrungen 34 durchgriffen, die dafür Sorge tragen, dass bei der Hin- und Herbewegung des Betätigungskolbens 32 innerhalb des Verfahrraumes 36 ein Druckausgleich erfolgen kann, so dass dergestalt nicht die freie Bewegbarkeit des Betätigungskolbens 32 gehemmt ist.

Der Kolben 32 ist unter der Wirkung einer bestrombaren Spule 38 verfahrbar, deren Spulenwicklung sich auf einem im Querschnitt U-förmigen Spulengrundkörper 40 befindet. Die flanschartigen Enden des Spulengrundkörpers 40, zwischen dem sich die Spulenwicklung erstreckt, stützt sich radial gesehen außenumfangsseitig an der Innenwand des zylindrischen Magnetgehäuses 10 ab. Die Anordnung von Betätigungskolben 32 und Betätigungsteil 30 wirkt auf einen nicht näher dargestellten Ventilkörper des Schaltventils 42 ein, das in der Fig. 1 nur teilweise mit seinem Ventilgehäuse 44 am vorderen Ende dargestellt ist, soweit dieses dem Schaltgehäuse 14 zugewandt ist. Die Betätigung von Ventilkolben und Schaltventil 42 mittels Betätigungsmagneten ist im Stand der Technik in einer Vielzahl von Ausführungsformen bekannt, so dass insoweit hierauf nicht mehr näher eingegangen wird.

Zur Verbindung von Schaltgehäuse 14 mit Ventilgehäuse 44 weist das Schaltgehäuse 14 zwei radial sich erstreckende Flanschteile 46 auf, die dem Durchgriff von Befestigungsmitteln, wie Schrauben (nicht dargestellt), dienen, wobei zwischen Schaltgehäuse 14 und Ventilgehäuse 44 mindestens eine Dichteinrichtung 48 angeordnet ist. Die Gewindebohrungen für die Schrauben im Ventilgehäuse 44 sind gleichfalls der einfacheren Darstellung wegen weggelassen. Die genannten Flanschteile 46 erstrecken sich in der Art von Ringflanschen am Außenumfang des Schaltgehäuses 14 und sind vorzugsweise einstückiger Bestandteil des Schaltgehäuses 14. Ferner sind die Flanschteile 46 diametral einander gegenüberliegend zur Längsachse 50 der Schaltvorrichtung angeordnet. Innerhalb der Flanschteile 46 sind buchsenartige Ausnehmungen 52 vorhanden, in die Einsatzbuchsen 54, vorzugsweise aus Metallwerkstoff, eingesetzt sein können. Die dahingehenden Einsatzbuchsen 54 bilden einen Schutz für das ansonsten relativ weich gehaltene Kunststoffmaterial des Schaltgehäuses 14.

Wie sich des weiteren aus der Fig. 1 ergibt, sind zumindest im Angriffsbereich des jeweiligen Flanschteils 46 die einander zugewandten Stirnseiten 56 von Schaltgehäuse 14 und Ventilgehäuse 44 für eine direkte Anlage miteinander eben ausgebildet. Das Ventilgehäuse 44 weist gleichfalls eine Mittenausnehmung 58 auf, die sowohl zur Längsführung des Ventilkolbens (nicht dargestellt) dient sowie dem Eingriff des freien Endes des Polkerns 18 mit seinen Dichtmitteln 28.

Wie bereits dargelegt, ist das Schaltgehäuse 14 ein Kunststoff-Spritzgießteil, wobei am freien, dem Ventilgehäuse 44 zugewandten Ende ein ringförmiger Metallabschluß 60, vorzugsweise durch Spritzgießen hergestellt, zwischen Schaltgehäuse 14 und Polkern 18 eingebracht ist. Der dahingehende Metallabschluß 60 weist außenumfangsseitig eine nutförmige Vertiefung 62 auf, vorzugsweise in der Art eines V's ausgebildet, in die das Schaltgehäuse 14 entsprechend mit einer ring- und V-förmigen Eingriffsspitze eingreift. An der Stelle des Überganges zwischen dem freien Ende des Metallabschlusses 60 und dem Übergang des Schaltgehäuses 14 zu dem jeweiligen Flanschteil 46 ist ein O-Dichtring angeordnet, der die Dichteinrichtung 48 bildet. Die dahingehende Dichteinrichtung 48 ist in einer stirnseitigen Ausnehmung 64 im Ventilgehäuse 44 angeordnet. Die Dichteinrichtung 48 läßt sich sicher in die Ausnehmung 64 einlegen und durch das stirnseitige Verpressen von Schaltgehäuse 14 gegen Ventilgehäuse 44 ist eine Verpressung der Dichteinrichtung 48, vorzugsweise aus Elastomermaterial gebildet, gewährleistet, ohne dass es hier zu einem schädigenden Einfluß kommen könnte und ohne dass es ungewollt zu einer Verschiebung der Dichteinrichtung 48 kommt, was gegebenenfalls die Wirksamkeit der Dichtung beeinträchtigen könnte.

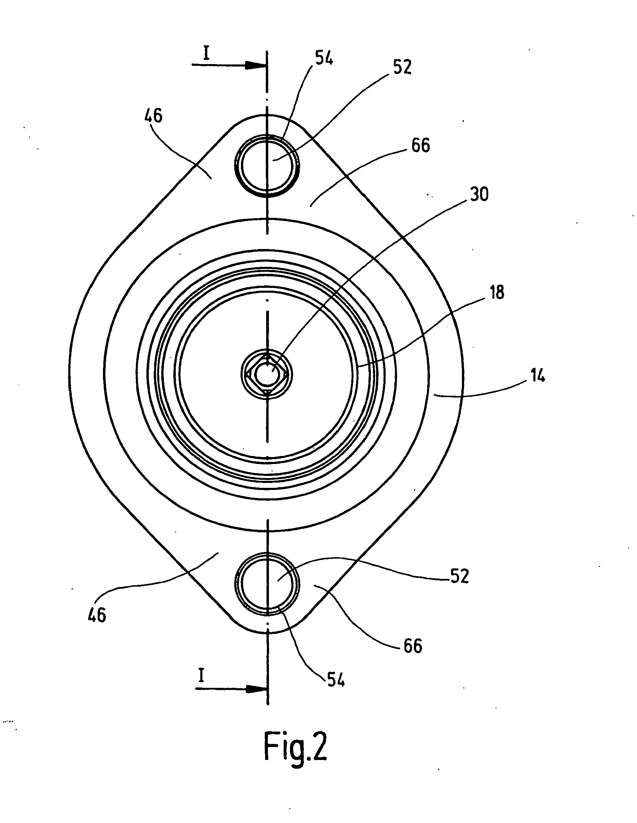

Wie insbesondere die Fig.2 zeigt, weisen die beiden diametral einander gegenüberliegenden Flanschteile 46 stegartige Versteifungsteile 66 auf, die einstückiger Bestandteil des Schaltgehäuses 14 sind und die sich in Blickrichtung auf die Fig.1 gesehen von links nach rechts zu den Flanschteilen 46 hin verbreitern. Die dahingehenden Versteifungsteile 66 gewährleisten zum einen die Versteifung des Gesamtsystems und zum anderen verstärken sie die Verbindung der beiden Gehäuse 14,44 miteinander über die jeweilige Schraubverbindung, die die buchsenartige Ausnehmungen 52 der Flanschteile 46 über die Einsatzbuchsen 54 durchgreifen. Die stegartigen Versteifungsteile 66 sind außenumfangsseitig und quer zur Längsachse 50 verlaufend mit einer Krümmung versehen, wobei die Krümmung an den einander gegenüberliegenden abgewandten Seiten der beiden Flanschteile 46 am größten ist und dann in Richtung des zylindrischen Schaltgehäuses 14 hin abnimmt. Dergestalt sind relativ hohe Auflageflächen für die Flanschteile 46 am freien stirnseitigen Ende des Ventilgehäuses 14 erreichbar. In Blickrichtung auf die Fig.1 gesehen links liegt der Abschlußboden 22 an dem plattenförmigen Abschlußteil 68 an, das nach außen hin von dem Kunststoffmaterial des Schaltgehäuses 14 umfaßt ist. An dem dem Polkern 18 gegenüberliegenden Ende weist darüber hinaus das Schaltgehäuse 14 ein Kontaktteil 70 auf, das in üblicher Art und Weise dem Herstellen einer elektrischen Steckverbindung dient.

Der Fortsatz 26 braucht nicht über seinen Außenumfang in das Ventilgehäuse 44 eingeschraubt zu sein; vorzugsweise bietet sich vielmehr auch die Möglichkeit, unter Verzicht der Schraubverbindung den zylindrischen Fortsatz 26 in die zugehörige Aufnahme in Form der Mittenausnehmung 58 einzustecken und die beim Betrieb des Magneten sowie der Ventilvorrichtung auftretenden Kräfte ausschließlich über die ausgesteifte Flanschverbindung aufzufangen. Bei der dahingehenden Ausgestaltung (nicht dargestellt) braucht der Fortsatz 26 keinen stufenweisen Absatz aufzuweisen, wie bei der Realisierung der angesprochenen Schraubverbindung.

Des weiteren kann die Vertiefung 62 entfallen und zwischen Schaltgehäuse 14 und Polrohr 18 kann auch ein anderer Verbindungsabschluß (nicht dargestellt) erfolgen, wobei dieser nicht zwingend aus Metallwerkstoff zu realisieren ist.

Mit der erfindungsgemäßen Schaltvorrichtung läßt sich auf modulare Art und Weise die Anbindung von Schaltmagneten an Ventilgehäusen jedweder Art erreichen.

## Patentansprüche

1. Schaltvorrichtung zum Betätigen von Schaltventilen (42) mit einem hülsenförmigen Magnetgehäuse (10), das zumindest teilweise ein Polrohr (16) und einen Polkern (18) umfaßt, die über eine magnetische Trennung (20) voneinander getrennt sind und die einen Betätigungskolben (32) umfassen, der unter der Einwirkung einer bestrombaren Spule (38) längsverfahrbar innerhalb eines Schaltgehäuses (14) verfahrbar ist und der über ein Betätigungsteil (30), das den Polkern (18) durchgreift, auf einen Ventilkolben einwirkt, der in einem Ventilgehäuse (44) des Schaltventils (42) geführt ist, **dadurch gekennzeichnet, dass** zur Verbindung von Schalt(14)- und Ventilgehäuse (44) das Schaltgehäuse (14) mindestens zwei radial sich erstreckende Flanschteile (46) aufweist, die dem Durchgriff von Befestigungsmitteln dienen, und dass zwischen Schalt(14)- und Ventilgehäuse (44) mindestens eine Dichteinrichtung (48) angeordnet ist.

2. Schaltvorrichtung nach Anspruch 1, **dadurch gekennzeichnet, dass** zumindest im Angriffsbereich des jeweiligen Flanschteils (46) die einander zugewandten Stirnseiten (56) von Schalt(14)- und Ventilgehäuse (44) für eine direkte Anlage miteinander eben ausgebildet sind.

3. Schaltvorrichtung nach Anspruch 1 oder 2, **dadurch gekennzeichnet, dass** das Ventilgehäuse (44) eine Mittenausnehmung (58) aufweist zur Längsführung des Ventilkolbens, der mit dem Betätigungsteil (30) in Wirkverbindung steht, und dass die Mittenausnehmung (58) ein Teil des Polkerns (18) aufnimmt.

4. Schaltvorrichtung nach einem der Ansprüche 1 bis 3, **dadurch gekennzeichnet, dass** das Schaltgehäuse (14) ein Kunststoff-Spritzgießteil ist und dass am freien, dem Ventilgehäuse (44) zugewandten Ende ein Metallabschluß (60), vorzugsweise durch Spritzgießen hergerstellt, zwischen Schaltgehäuse (14) und Polkern (18) eingebracht ist.

5. Schaltvorrichtung nach Anspruch 4, **dadurch gekennzeichnet, dass** der Metallabschluß (60) außenumfangsseitig eine nutförmige Vertiefung (62) aufweist, in die das Schaltgehäuse (14) eingreift.

6. Schaltvorrichtung nach einem der Ansprüche 1 bis 5, **dadurch gekennzeichnet, dass** die Flanschteile (46) stegartige Versteifungsteile (66) aufweisen, die Teil des Schaltgehäuses (14) sind.

7. Schaltvorrichtung nach einem der Ansprüche 1 bis 6, **dadurch gekennzeichnet, dass** zwei Flanschteile (46) diametral zur Längsachse (50) des Schaltgehäuses (14) gegenüberliegend angeordnet sind.

8. Schaltvorrichtung nach Anspruch 6 oder 7, **dadurch gekennzeichnet, dass** die stegartigen Versteifungsteile (66) außenumfangsseitig mit abnehmender Krümmung in den Außenumfang des Schaltgehäuses (14) übergehen.

9. Schaltvorrichtung nach einem der Ansprüche 1 bis 8, **dadurch gekennzeichnet, dass** an dem dem Ventilgehäuse (44) gegenüberliegenden Ende des Schaltgehäuses (14) dieses ein Kontaktteil (70) aufweist zum Herstellen einer elektrischen Steckverbindung.

10. Schaltvorrichtung nach einem der Ansprüche 1 bis 9, **dadurch gekennzeichnet, dass** die Dichteinrichtung (48) einen O-Ring aufweist.

## Claims

1. A switching device for operating switching valves (42) having a sleeve-shaped magnet housing (10) that comprises at least partially a pole tube (16) and a pole core (18) separated from one another by a magnetic separation (20) and which comprise an operating piston (32) which, by the action of an energisable coil (38), can be moved longitudinally within a switching housing (14) and which, by means of an operating part (30), passes through the pole core (18), acts upon a valve piston that is guided within a valve housing (44) of the switching valve (42), **characterised in that**, for the connection of the switching (14) and the valve housing (44) the switching housing (14) has at least two radially extending flange sections (46) serving for the passage of fastening means, and that at least one sealing device (48) is disposed between the switching (14) and the valve housing (44).

2. The switching device according to Claim 1, **characterised in that** at least in the action region of the respective flange section (46) the face sides (56) facing one another of the switching (14) and the valve housing (44) are designed to be level so as to come into direct contact with one another.

3. The switching device according to Claim 1 or 2, **characterised in that** the valve housing (44) has a central recess (58) for guiding longitudinally the valve piston which is functionally connected to the operating part (30), and that the central recess (58) accommodates part of the pole core (18).

4. The switching device according to any of Claims 1 to 3, **characterised in that** the switching housing (14) is a plastic injection moulded part and that on the free end facing towards the valve housing (44) a metal ending (60), preferably produced by injection moulding, is introduced between the switching housing (14) and the pole core (18).

5. The switching device according to Claim 4, **characterised in that** the metal ending (60) has on the outer circumference side a groove-shaped indentation (62) in which the switching housing (14) engages.

6. The switching device according to any of Claims 1 to 5, **characterised in that** the flange sections (46) have bridge-like reinforcing parts (66) which are part of the switching housing (14).

7. The switching device according to any of Claims 1 to 6, **characterised in that** two flange sections (46) are arranged diametrically opposite the longitudinal axis (50) of the switching housing (14).

8. The switching device according to Claim 6 or 7, **characterised in that** the bridge-type reinforcing parts (66) pass over on the outer circumference side with decreasing curvature into the outer circumference of the switching housing (14).

9. The switching device according to any of Claims 1 to 8, **characterised in that** on the end of the switching housing (14) lying opposite the valve housing (44) the latter has a contact part (70) for producing an electrical plug-in connection.

10. The switching device according to any of Claims 1 to 9, **characterised in that** the sealing device (48) has an O-ring.

## Revendications

1. Dispositif de commutation pour l'actionnement de vannes (42) de commutation ayant un corps (10) magnétique en forme de douille et comprenant au moins en partie un tube (16) polaire et un noyau (18) polaire, qui sont séparés l'un de l'autre par une séparation (20) magnétique et qui comprennent un piston (32) d'actionnement qui, sous l'action d'une bobine (32) pouvant être alimentée en courant électrique, peut être déplacée longitudinalement dans un corps (14) de commutation et qui agit par une partie (30) d'actionnement, qui traverse le noyau (18) polaire, sur un piston de vanne, qui est guidé dans un corps de vanne (42) de commutation, **caractérisé en ce que**, pour la liaison du corps (14) de commutation et du corps (44) de vanne, le corps (14) de commutation comporte au moins deux parties (46) de bride, qui s'étendent radialement et qui servent au passage de moyens de fixation et **en ce qu'**au moins un dispositif (48) d'étanchéité est disposé entre le corps (14) de commutation et le corps (44) de vanne.

2. Dispositif de commutation suivant la revendication 1, **caractérisé en ce qu'**au moins dans la zone d'attaque de la partie (46) respective de bride, les côtés (56) frontaux, tournés l'un vers l'autre, du corps (14) de commutation et du corps (44) de vanne sont constitués de manière plan entre eux pour une application directe.

3. Dispositif de commutation suivant la revendication 1 ou 2, **caractérisé en ce que** le corps (44) de vanne comporte un évidement (58) médian pour le guidage longitudinal du piston de vanne, qui est en coopération avec la partie (30) d'actionnement et **en ce que** l'évidement (58) médian reçoit une partie du noyau (18) polaire.

4. Dispositif de commutation suivant l'une des revendications 1 à 3, **caractérisé en ce que** le corps (14) de commutation est une pièce en matière plastique moulée par injection et **en ce que**, à l'extrémité libre tournée vers le corps (44) de vanne, est interposée une fermeture (60) métallique, de préférence fabriquée par moulage par injection, entre le corps (14) de commutation et le noyau (18) polaire.

5. Dispositif de commutation suivant la revendication 4, **caractérisé en ce que** la fermeture (60) métallique a, du côté du pourtour extérieur, une cavité (62) en formé de rainure, dans laquelle pénètre le corps (14) de commutation.

6. Dispositif de commutation suivant l'une des revendications 1 à 5, **caractérisé en ce que** les parties (16) de bride comportent des parties (66) de rigidification en forme de réglette, qui font partie du corps (14) de commutation.

7. Dispositif de commutation suivant l'une des revendications 1 à 6, **caractérisé en ce que** deux parties (46) de bride sont disposées de manière diamétralement opposées par rapport à l'axe (50) longitudinal du corps (14) de commutation.

8. Dispositif de commutation suivant la revendication 6 ou 7, **caractérisé en ce que** les parties (66) de rigidification en forme de réglette se transforment, du côté du pourtour extérieur, avec une courbure décroissante en le pourtour extérieur du corps (14) de commutation.

9. Dispositif de commutation suivant l'une des revendications 1 à 8, **caractérisé en ce qu'**à l'extrémité, opposée au corps (44) de vanne, du corps (14) de commutation celui-ci a une partie (70) de contact pour ménager une liaison électrique par enfichage.

10. Dispositif de commutation suivant l'une des revendications 1 à 9, **caractérisé en ce que** le dispositif d'étanchéité comporte un joint torique.
